# EUROPÄISCHE PATENTANMELDUNG

(11) **EP 4 831 592 A1**
(43) Veröffentlichungstag der Anmeldung: **28.10.2026**
(21) Anmeldenummer: 26172149.2
(22) Anmeldetag: 14.04.2026
(51) Int. Cl.: G01D 5/20

(54) **WIRBELSTROMSENSOR**

(30) Priorität: 21.04.2025 DE 102025115365
(71) Anmelder: BOURNS, INC., Riverside CA 92507 (US)
(72) Erfinder: Seene, Christian, 85653 Aying (DE)
(74) Vertreter: von Bülow & Tamada

(57) **Zusammenfassung**

Offenbart wird ein Wirbelstromsensor (33) zur Erfassung einer Relativposition (32) in einer Bewegungsrichtung, umfassend
- einen ersten Wirbelstromsensorpartner (34, 37) und einen zum ersten Wirbelstromsensorpartner in der zu erfassenden Relativposition (32) dazu positionierbaren zweiten Wirbelstromsensorpartner (37, 34), wobei die Wirbelstromsensorpartner eingerichtet sind, ein von der Relativposition abhängiges elektromagnetisches Messfeld zu erregen, und
- eine Auswerteschaltung (36), die eingerichtet ist, die Relativposition (32) basierend auf dem elektromagnetischen Messfeld zu bestimmen,
**gekennzeichnet durch**
- einen zum ersten Wirbelstromsensorpartner in einem vorbestimmten Abstand ortsfest angeordneten Korrekturpartner (40) zum Erregen eines elektromagnetischen Korrekturfeldes zur Korrektur einer Querverschiebung in Fahrtrichtung (3) zwischen den Wirbelstromsensorpartnern quer zur Bewegungsrichtung (31).

## Beschreibung

Die vorliegende Erfindung betrifft einen Wirbelstromsensor gemäß dem Oberbegriff des Anspruchs 1, einen Spurstangensensor mit dem Wirbelstromsensor und ein Verfahren zum Erfassen einer Relativposition gemäß dem Oberbegriff des Anspruchs 9.

Aus der DE19631438A1 ist ein Wirbelstromsensor gemäß dem Oberbegriff des Anspruchs 1 bekannt.

Aus der DE 10 2022 114 508 A1 ist bekannt, in einem Wirbelstromsensor mit einem weiteren Target das Messsignal zu verstärken.

Es ist Aufgabe der Erfindung, das bekannte System zu verbessern.

Ausgehend von einem Wirbelstromsensor zur Erfassung einer Relativposition in einer Bewegungsrichtung mit einem ersten Wirbelstromsensorpartner und einen zum ersten Wirbelstromsensorpartner in der zu erfassenden Relativposition dazu positionierbaren zweiten Wirbelstromsensorpartner, bei dem die Wirbelstromsensorpartner eingerichtet sind, ein von der Relativposition abhängiges elektromagnetischen Messfeld zu erregen, und mit einer Auswerteschaltung, die eingerichtet ist, die Relativposition basierend auf dem elektrischen elektromagnetischen Messfeld zu bestimmen, wobei einer der Wirbelstrompartner eingerichtet ist, das elektromagnetische Messfeld zu erregen und der andere Wirbelstrompartner eingerichtet ist, das basierend auf dem elekromagnetischen Messfeld ein elektromagnetisches Induktionsfeld zu erregen, wobei der das elektromagnetische Induktionsfeld erregende Wirbelstrompartner in einer Querrichtung quer zur Bewegungsrichtung und quer zum Abstand der Wirbelstrompartner eine kleinere Ausdehnung besitzt, als der das elektromagnetische Messfeld erregende Wirbelstrompartner ist erfindungsgemäß ein zum ersten Wirbelstromsensorpartner in einem vorbestimmten Abstand ortsfest angeordneten Korrekturpartner zum Erregen eines elektromagnetischen Korrekturfeldes zur Korrektur einer Querverschiebung zwischen den Wirbelstromsensorpartnern quer zur Bewegungsrichtung angeordnet.

Dem eingangs genannten Wirbelstromsensor liegt die Überlegung zugrunde, dass bei einer ausschließlich in Bewegungsrichtung vorgesehenen Auswertung der Relativposition Querbewegungen, wie sie beispielsweise durch mechanische Toleranzen, Verformungen oder Durchbiegung von Bauteilen wie etwa einer Spurstange - auch Lenkstange genannt - auftreten können, nicht erfasst werden. Derartige Querverschiebungen können das elektromagnetische Messfeld unsymmetrisch beeinflussen und führen zu verfälschten Messergebnissen, da sie sich nicht ohne Weiteres von den eigentlich interessierenden Relativbewegungen unterscheiden lassen. Insbesondere bei hochdynamischen Anwendungen oder solchen mit begrenzten mechanischen Freiheiten kann dies zu unzulässigen Messfehlern führen.

Hier greift der eingangs genannte Wirbelstromsensor mit der Idee an, einen Korrekturpartner in einem vorbestimmten Abstand zu einem der beiden Wirbelstromsensorpartner anzuordnen. Der Korrekturpartner steht in einer bekannten geometrischen Beziehung zu einem der Wirbelstromsensorpartner und ist so in den Wirbelstromsensor eingebunden, dass über diesen Abstand zusätzliche Informationen gewonnen werden können, die eine Berücksichtigung oder Korrektur einer Querverschiebung zwischen den Wirbelstromsensorpartnern quer zur Bewegungsrichtung ermöglichen. Da bei einer Querverschiebung die Abstände beider Wirbelstromsensorpartner zueinander unterschiedlich beeinflusst werden, ermöglicht die bekannte Geometrie zwischen dem Korrekturpartner und dem zugeordneten Wirbelstromsensorpartner eine Differenzierung zwischen der Relativbewegung in Bewegungsrichtung und einer Verschiebung quer dazu.

Auf diese Weise lässt sich eine Querverschiebung zwischen den Wirbelstromsensorpartnern von vornherein auslöschen, zur Fehlererkennung identifizieren oder zur Steigerung der Sensorzuverlässigkeit in der erfassten Relativposition kompensieren, sodass eine deutlich robustere und zuverlässigere Erfassung der Relativposition in der Bewegungsrichtung möglich wird. Die Erfindung eignet sich insbesondere für Anwendungen, in denen die Wirbelstromsensorpartner Teil mechanisch nachgiebiger oder verbiegungsfähiger Strukturen sind, bei denen Positionsänderungen nicht ausschließlich entlang einer idealisierten Bewegungsrichtung erfolgen. Ein typisches Beispiel hierfür ist die Erfassung des Radeinschlagwinkels über die Position einer Spurstange im Fahrzeug, bei der durch Biegeeffekte aufgrund der Schwerkraft des Fahrzeuges oder Montagetoleranzen Querbewegungen auftreten können, die ohne die erfindungsgemäße Korrekturmöglichkeit zu erheblichen Messfehlern führen würden.

Zwar sind Wirbelstromsensoren bekannt, die mit mehreren Wirbelstromsensorpartnern betrieben werden, bei denen insbesondere mehrere feldbeeinflussende Elemente vorgesehen sind, um beispielsweise die Signalstärke zu erhöhen. In derartigen Anordnungen weisen die feldbeeinflussenden Elemente typischerweise eine größere laterale Ausdehnung auf als das felderzeugende Element, sodass die feldbeeinflussenden Elemente über einen im Wesentlichen homogenen Bereich des elektromagnetischen Messfeldes wirken und ihre Beiträge gleichgerichtet zur Messgröße beitragen. Dies führt insbesondere zu einer additiven Überlagerung der Signalanteile.

Demgegenüber liegt der vorliegenden Erfindung die Erkenntnis zugrunde, dass ein abweichendes Wirkverhalten erzielt werden kann, wenn die laterale Ausdehnung des das elektromagnetische Induktionsfeld erregenden Wirbelstromsensorpartners in einer zur Bewegungsrichtung sowie zur Verbindungsrichtung zwischen den Wirbelstromsensorpartnern orthogonalen Richtung kleiner gewählt wird als die entsprechende Ausdehnung des das elektromagnetische Messfeld erregenden Wirbelstromsensorpartners. In einer solchen Anordnung befinden sich die Wirbelstromsensorpartner nicht in einem im Wesentlichen homogenen Feldbereich, sondern in Bereichen unterschiedlicher Feldstärke, sodass eine Relativverschiebung quer zur Bewegungsrichtung zu einer gegensinnigen Änderung der elektromagnetischen Kopplung der Wirbelstromsensorpartner führt. Dadurch wird erreicht, dass störende Querbewegungen nicht zu einer gleichgerichteten Signaländerung führen, sondern sich zumindest teilweise kompensieren, wodurch die Robustheit der Positionsbestimmung deutlich verbessert wird.

Die Begriffe *"Wirbelstromsensorpartner*" bezeichnen komplementäre funktionale Einheiten des Wirbelstromsensors, die gemeinsam an der Erzeugung und der feldabhängigen Beeinflussung des elektromagnetischen Quellfeldes beteiligt sind. Dabei ist einer der Wirbelstromsensorpartner als Erregerelement, also als Erregerspule, zur Erzeugung eines elektromagnetischen Quellfeldes zu verstehen, während der andere Wirbelstromsensorpartner als Reflektorelement zur Erzeugung eines Induktionsfeldes eingerichtet ist, das dem elektromagnetischen Quellfeld entgegengerichtet ist und zumindest als Teil des elektromagnetischen Messfeldes dient. Die Zuordnung der Rollen ist eindeutig: Wird ein Wirbelstromsensorpartner als Erregerelement verstanden, so ist der andere zwingend als Reflektorelement zu interpretieren, und umgekehrt.

Die Bestimmung der zu erfassenden Relativposition aus dem elektromagnetischen Messfeld mit dem elektromagnetischen Induktionsfeld kann grundsätzlich auf zwei Weisen erfolgen. Einerseits ist es möglich, die zu erfassende Relativposition aus einer durch das elektromagnetische Messfeld verursachten Veränderung der elektrischen Eigenschaften der Erregerspule selbst heraus zu bestimmen. Diese Eigenschaftsänderungen können durch eine Analyse der Impedanz der Erregerspule, insbesondere ihres Wechselstromwiderstands, ihrer Induktivität und/oder der Phasenlage zwischen Strom und Spannung, bestimmt werden. Dieses sogenannte Dämpfungsprinzip beruht auf der Tatsache, dass das elektromagnetische Quellfeld, welches durch die Erregerspule erzeugt wird, in dem Reflektor Wirbelströme induziert, die ihrerseits das elektromagnetische Induktionsfeld in Form eines Gegenfeldes erzeugen, welches die Stromaufnahme sowie der Impedanz der Erregerspule beeinflusst. Die Relativposition wird in dieser Variante durch Auswertung der resultierenden Impedanzänderung bestimmt. Andererseits kann die zu erfassende Relativposition auf Basis des sogenannten Transformatorprinzips bestimmt werden. Dabei sind zusätzlich zur Erregerspule wenigstens eine Empfangsspule vorhanden, in der durch das vom Reflektor ausgehende elektromagnetische Induktionsfeld eine Spannung induziert wird. Diese Spannung hängt in charakteristischer Weise von der räumlichen Beziehung zwischen Erregerspule, Reflektor und Empfängerspule ab. Die Relativposition kann in diesem Fall aus der Höhe, Phase oder Frequenzabhängigkeit der induzierten Spannung bestimmt werden.

In einer Weiterbildung des angegebenen Wirbelstromsensors umfasst der erste Wirbelstromsensorpartner einen Reflektor und der zweite Wirbelstromsensorpartner eine Erregerspule zur Erregung eines elektromagnetischen Quellfeldes, wobei der Reflektor eingerichtet ist, basierend auf dem elektromagnetischen Quellfeld ein im elektromagnetischen Messfeld enthaltenes elektromagnetisches Induktionsfeld zu erregen. Auf diese Weise lässt sich bei ortsfester Anordnung des Korrekturpartners relativ zum Reflektor eine direkte geometrische Beziehung zwischen diesen beiden Elementen herstellen, sodass eine durch Querverschiebung bedingte Veränderung des Abstands zwischen dem Reflektor-Korrekturpartner-System und der Erregerspule eindeutig aus einer Gegenüberstellung des elektromagnetischen Induktionsfeldes und des elektromagnetischen Korrekturfeldes interpretierbar ist. Dies ermöglicht eine robuste Differenzierung zwischen Relativbewegungen in Messrichtung und Querbewegungen, da sich letztere aufgrund der festen internen Geometrie des Reflektors und des Korrekturpartners in charakteristischer Weise auf die jeweiligen Messgrößen auswirken.

In einer besonderen Ausführung des weiter oben erläuterten Transformatorprinzips werden mehrere Empfangsspulen mit einer periodischen Geometrie, insbesondere sinus- und kosinusförmiger Geometrie, verwendet, die phasenversetzt zueinander angeordnet sind. Die empfangenen Signale dieser Spulen lassen sich dabei zueinander in Beziehung setzen, sodass durch eine phasenbasierte Interpolation eine Feindetektion der Relativposition möglich ist. Dieses Verfahren erlaubt in analoger Weise zum Nonius- oder Interpolationsprinzip eine deutliche Verfeinerung der Positionsbestimmung innerhalb eines geometrischen Grundrasters und trägt so zur Erhöhung der Messgenauigkeit und Auflösung des Sensors bei.

In einer besonderen Weiterbildung des angegebenen Wirbelstromsensors ist der Korrekturpartner ein Reflektor und eingerichtet, ein dem elektromagnetischen Induktionsfeld des ersten Wirbelstrompartners entgegengesetztes elektromagnetisches Induktionsfeld zu erregen. Auf diese Weise kann der Korrekturpartner ohne zusätzliche elektrische Ansteuerung oder Signalverarbeitung in das bestehende Sensorsystem integriert werden, was insbesondere in beengten oder integrationskritischen Anwendungen zu einem geringeren Platzbedarf führt. Da keine eigenen Versorgungsleitungen oder Signalanschlüsse erforderlich sind, lassen sich kompakte und mechanisch robuste Sensoreinheiten realisieren, bei denen die Funktionalität zur Querverschiebungskorrektur durch rein strukturelle Maßnahmen erreicht wird.

In einer bevorzugten Weiterbildung des angegebenen Wirbelstromsensors ist die Erregerspule als sich in einer durch die Bewegungsrichtung aufgespannten Spulenebene erstreckende Flachspule ausgebildet. Auf diese Weise wird eine hohe Empfindlichkeit für Abstandsänderungen senkrecht zur Spulenebene erreicht, wodurch sich insbesondere Relativbewegungen des Reflektors quer zur Bewegungsrichtung mit hoher Auflösung detektieren lassen. Zudem ermöglicht die flache Bauform eine platzsparende Integration in kompakte Sensoranordnungen. Darüber hinaus erlaubt der zweidimensionale Aufbau der Flachspule eine einfache Erweiterung zu Mehrkanalsystemen, etwa durch Anordnung mehrerer Flachspulen nebeneinander oder in differenzieller Konfiguration, wodurch die Detektion und Kompensation von Querverschiebungen zusätzlich verbessert werden kann.

In einer besonders bevorzugten Weiterbildung des angegebenen Wirbelstromsensors steht die Spulenebene senkrecht zu einer gedachten Verbindungslinie zwischen dem ersten Wirbelstromsensorpartner und dem Korrekturpartner. Auf diese Weise wird eine klare geometrische Trennung zwischen der Haupterfassungsrichtung des Sensors und der Relativlage der feldwirksamen Elemente erzielt, wodurch Querverschiebungen in charakteristischer Weise differenziert und einer strukturellen Korrektur zugänglich gemacht werden können. Darüber hinaus wird die gegenseitige Beeinflussung der Felder minimiert, was die Signalqualität verbessert und die Auswertung vereinfacht. Die orthogonale Anordnung unterstützt zudem eine kompakte und kalibrierbare Integration aller Sensorkomponenten mit hoher Messgenauigkeit und Stabilität, insbesondere in mechanisch anspruchsvollen Umgebungen.

In einer zusätzlichen Weiterbildung des angegebenen Wirbelstromsensors trennt der zweite Wirbelstromsensorpartner einen Raum in einen ersten Halbraum und einen dem ersten Halbraum gegenüberliegenden zweiten Halbraum, wobei der erste Wirbelstromsensorpartner im ersten Halbraum und der Korrekturpartner im zweiten Halbraum angeordnet sind. Auf diese Weise wird eine symmetrische Sensorarchitektur geschaffen, bei der der zweite Wirbelstromsensorpartner als zentraler Bezugspunkt dient, während die feldbeeinflussenden Elemente beidseitig in definierter Geometrie dazu angeordnet sind. Dies ermöglicht eine differenzielle Auswertung, bei der sich Relativbewegungen des ersten Wirbelstromsensorpartners und des Korrekturpartners jeweils gegenläufig auf die Messgröße auswirken, sodass insbesondere seitliche Abweichungen oder asymmetrische Einflüsse detektierbar oder kompensierbar sind. Die Weiterbildung ist besonders wirkungsvoll im Falle einer Anordnung, bei der der zweite Wirbelstromsensorpartner eine Erregerspule ist, die sich in einer durch die Bewegungsrichtung aufgespannten Spulenebene erstreckt und senkrecht zur Verbindungslinie zwischen dem ersten Wirbelstromsensorpartner und dem Korrekturpartner, die beide als Reflektoren ausgebildet sind, angeordnet ist. In dieser Konfiguration wirkt die schwächende Beeinflussung des Korrekturpartners einer durch Querverschiebung bedingten Asymmetrie in der Feldkopplung des ersten Wirbelstromsensorpartners entgegen, wodurch sich Querfehler strukturell unterdrücken lassen, ohne dass sie durch die Auswerteschaltung noch ausgewertet werden müssten.

In einer weiteren Weiterbildung des angegebenen Wirbelstromsensors sind der erste Wirbelstromsensorpartner im ersten Halbraum und der Korrekturpartner in der Bewegungsrichtung gesehen auf einer gleichen Position angeordnet. Auf diese Weise wird die Symmetrie der feldbeeinflussenden Elemente relativ zur Bewegungsrichtung erhöht, wodurch sich der Einfluss von Querverschiebungen auf das elektromagnetische Messfeld weiter verringert. Durch die gleichgerichtete Positionierung von Reflektor und Korrekturpartner entlang der Bewegungsrichtung wirken sich laterale Abweichungen in annähernd gegenläufiger Weise auf die jeweilige Feldkopplung aus, sodass sich Querfehler bei entsprechender Auswertung deutlicher erkennen und in ihrer Wirkung abschwächen lassen. Die Weiterbildung stellt somit eine Verfeinerung des Konzepts zur strukturellen Querverschiebungskompensation dar und verbessert die Robustheit der Positionsauswertung gegenüber seitlichen Toleranzen oder Biegeeffekten.

In einer zusätzlichen Weiterbildung des angegebenen Wirbelstromsensors sind der erste Wirbelstromsensorpartner im ersten Halbraum und der Korrekturpartner baugleich. Auf diese Weise wird die Feldsymmetrie auf struktureller Ebene weiter verbessert, sodass sich Querverschiebungen bei entsprechender Anordnung, insbesondere bei symmetrischen Abständen der beiden Partner zur Erregerspule, weitgehend oder vollständig aus dem Sensorsignal herauskürzen lassen. Die baugleiche Ausgestaltung führt dazu, dass sich störende Effekte durch laterale Bewegungen gegensinnig und betragsgleich auf die Feldbeeinflussung auswirken, wodurch sie sich bei differenzieller Auswertung kompensieren. Dadurch kann die Relativposition in Bewegungsrichtung mit besonders hoher Genauigkeit und Störsicherheit erfasst werden - selbst in Systemen mit ausgeprägter mechanischer Nachgiebigkeit oder hoher thermischer Belastung.

Gemäß einem weiteren Aspekt der Erfindung umfasst ein Spurstangensensor zur Erfassung einer Position einer Spurstange eines Fahrzeuges in einer Querrichtung quer zur Fahrtrichtung einen der genannten Wirbelstromsensoren, wobei ein Wirbelstromsensorpartner ortsfest zu einem Chassis des Fahrzeuges und der andere Wirbelstromsensorpartner ortsfest zur Spurstange des Fahrzeuges verbindbar sind.

Dem angegebenen Spurstangensensor liegt die Überlegung zugrunde, dass eine direkte Positionsmessung an der Spurstange besonders sensibel auf Toleranzen und dynamische Verformungen reagiert, wie sie insbesondere durch Biegebeanspruchungen bei Fahrzeuglenkbewegungen auftreten können. Diese Querverformungen führen zu ungewollten Abstandsänderungen zwischen Sensorpartnern, was in herkömmlichen, nur auf ein Target bezogenen Sensorsystemen zu erheblichen Genauigkeitsverlusten führt. Zudem besteht bei bekannten Lösungen häufig die Notwendigkeit, auf der Spurstange platzraubende Sensoreinheiten ("Sensortürme") zu integrieren oder den Lenkwinkel indirekt über andere Komponenten wie das Lenkrad zu erfassen, was die Kosten und Komplexität erhöht.

Hier greift der angegebene Spurstangensensor mit der Idee an, zwei Wirbelstromsensorpartner mit definierter geometrischer Beziehung zueinander zu verwenden, zwischen denen sich das Erregerelement in einer mittigen Position befindet. Durch diese symmetrische Anordnung wirkt sich eine durch Biegung verursachte Querverschiebung der Spurstange in gleichgerichteter, aber entgegengesetzter Weise auf beide Feldbeeinflussungselemente aus, sodass sich die Störeinflüsse bei entsprechender Auswertung gegenseitig kompensieren. Die erfindungsgemäße Sensorkonfiguration ist dabei so gestaltet, dass die relative Querposition der Spurstange selbst bei mechanischer Verformung des Systems robust und verlässlich detektiert werden kann.

Auf diese Weise lässt sich der Radeinschlagwinkel direkt an der Spurstange erfassen, ohne auf komplexe oder teure Lenkwinkelsensorik am Lenkrad zurückgreifen zu müssen. Die Integration in das Chassis bzw. die Spurstange kann platzsparend und ohne bewegliche Kabelverbindungen erfolgen, wodurch sich neben einer Reduktion der Herstellungskosten auch die Robustheit gegenüber Umwelteinflüssen wie Vibration, Temperatur oder Schmutz erhöht. Der Verzicht auf separate Sensorbaugruppen an anderer Stelle im Fahrzeug vereinfacht die Systemarchitektur und eröffnet neue Möglichkeiten für modulare Lenksysteme, insbesondere in Anwendungen mit steer-by-wire-Technologie.

In einer Weiterbildung des angegebenen Lenkwinkelsensors weist das elektromagnetische Quellfeld eine magnetische Flussdichte auf, deren äquivalenter Stromrichtungsvektor in einer radial zur Bewegungsrichtung ausgerichteten Ebene angeordnet ist.

Gemäß einem weiteren Aspekt der Erfindung umfasst ein Verfahren zum Erfassen einer Relativposition in einer Bewegungsrichtung mit einem der angegebenen Wirbelstromsensoren die Schritte Erregen eines elektromagnetischen Quellfeldes mit einem der Wirbelstromsensorpartner, Erzeugen eines elektromagnetischen Messfeldes enthaltend ein basierend auf dem elektromagnetischen Quellfeldes erregten elektromagnetischen Induktionsfeld mit dem anderen der Wirbelstromsensorpartner, Erregen eines elektromagnetischen Korrekturfeldes mit dem Korrekturpartner zur Korrektur einer Querverschiebung in Fahrtrichtung zwischen den Wirbelstromsensorpartnern quer zur Bewegungsrichtung, und Bestimmen der Relativposition basierend auf dem elektromagnetischen Messfeld und dem elektromagnetischen Korrekturfeld.

Dem angegebenen Verfahren liegt die Überlegung zugrunde, dass die alleinige Auswertung eines durch ein elektromagnetisches Induktionsfeld gebildetes elektromagnetisches Messfeld - wie es bei konventionellen Wirbelstromsensorverfahren mit nur einem Reflektor üblich ist - besonders anfällig gegenüber Störungen durch Querbewegungen, Temperaturschwankungen und mechanische Verformungen ist. Gerade bei mechanisch flexiblen Strukturen, wie sie beispielsweise durch die Schwerkraft des Fahrzeuges bei der Spurstange in einem Fahrzeug auftreten, können sich Positionsveränderungen senkrecht zur eigentlichen Messrichtung erheblich auf die Sensorgenauigkeit auswirken und zu fehlerhaften Positionssignalen führen.

Hier greift das angegebene Verfahren mit der Idee an, zusätzlich ein Korrekturfeld zu erzeugen, das gezielt zur strukturellen Differenzierung von Relativposition und Querverschiebung genutzt werden kann. Die Erregung eines Korrekturfeldes durch einen in definierter geometrischer Beziehung zu einem der Wirbelstromsensorpartner angeordneten Korrekturpartner ermöglicht es, Messsignale zu erzeugen, die eine charakteristische Reaktion auf Querabweichungen zeigen. Durch die kombinierte Auswertung des gedämpften Erregerfeldes und des Korrekturfeldes lässt sich die Relativposition in Bewegungsrichtung mit verbesserter Genauigkeit bestimmen, da quer zur Bewegungsrichtung wirkende Störeinflüsse entweder systematisch unterdrückt oder eindeutig identifiziert und rechnerisch kompensiert werden können.

Auf diese Weise ergibt sich ein robustes, adaptiv auswertbares Messverfahren, das sich auch unter anspruchsvollen Umgebungsbedingungen einsetzen lässt. Die Integration des Korrekturfeldes in die Verfahrenslogik erlaubt darüber hinaus den Einsatz vereinfachter physikalischer Modelle für die Auswertung, da strukturell erzeugte Redundanz genutzt wird, um unerwünschte Einflüsse geometrisch und signaltechnisch voneinander trennbar zu machen. Das Verfahren eignet sich damit insbesondere für sicherheitsrelevante Anwendungen, bei denen hohe Genauigkeit und Fehlertoleranz bei gleichzeitig kompakter Bauweise gefordert sind.

Gemäß einem weiteren Aspekt der Erfindung ist eine Steuervorrichtung eingerichtet, um eines der angegebenen Verfahren durchzuführen.

In einer Weiterbildung der angegebenen Vorrichtung weist die angegebene Vorrichtung einen Speicher und einen Prozessor auf. Dabei ist das angegebene Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte des angegebenen Verfahrens durchzuführen, wenn das Computerprogramm auf einem elektronischen Gerät oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, das angegebene Verfahren durchführt.

Die oben beschriebenen Eigenschaften, Merkmale und Vorteile dieser Erfindung sowie die Art und Weise wie diese erreicht werden, werden verständlicher im Zusammenhang mit der folgenden Beschreibung der Ausführungsbeispiele, die im Zusammenhang mit der Zeichnung näher erläutert werden. Es zeigen:
Fig. 1 in einer schematischen Darstellung das Prinzip einer Fahrdynamikregelung eines Fahrzeugs,
Fig. 2 ein prinzipielles Schema des Fahrzeugs aus Fig. 1 in einer perspektivischen Ansicht,
Fig. 3a ein prinzipielles Schema eines herkömmlichen Wirbelstromsensors an einer Spurstange des Fahrzeuges der Fig. 2,
Fig. 3b ein prinzipielles Schema eines erfindungsgemäßen Wirbelstromsensors an einer Spurstange des Fahrzeuges der Fig. 2 aus einer ersten Ansicht, und
Fig. 3c den Wirbelstromsensor aus Fig. 3a und 3b aus einer zweiten Ansicht.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

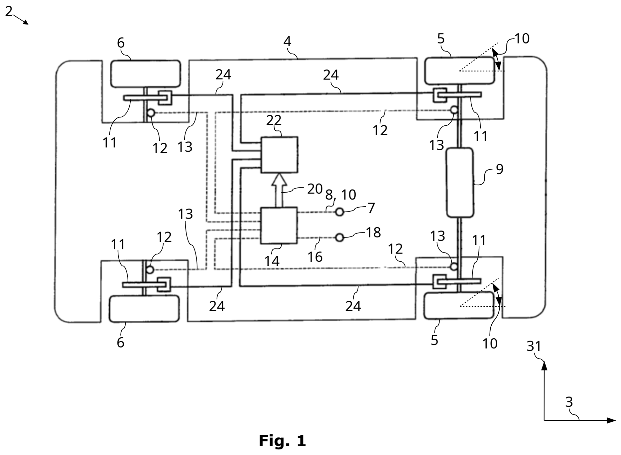

Bezugnehmend auf Fig. 1 wird eine schematische Darstellung eines Fahrzeugs 2 mit einer im Wesentlichen bekannten Fahrdynamikregelung gezeigt. Einzelheiten zu dieser Fahrdynamikregelung können der DE 10 2011 080 789 A1 entnommen werden.

Das Fahrzeug 2 ist in einer Fahrtrichtung 3 beweglich und umfasst ein auch Chassis genanntes Fahrgestell 4, das in Fahrtrichtung 3 über zwei Vorderräder 5 und zwei Hinterräder 6 beweglich getragen wird. Jedes Rad 5, 6 kann über eine noch erläuternde Bremse, die fest am Fahrgestell 4 montiert ist, abgebremst werden, um die Bewegung des Fahrzeugs 2 auf einer in den Figuren nicht gezeigten Straße zu verlangsamen.

Die Fahrtrichtung 3 während der Bewegung des Fahrzeugs 2 kann durch den Fahrer des Fahrzeugs 2 durch Verdrehen eines Lenkrads 7, das in Fig. 1 symbolisch dargestellt ist, in einen Lenkwinkel 8 gesteuert werden. Das Lenkrad 7 steuert seinerseits basierend auf dem Lenkwinkel 8 ein Lenkgetriebe 9, das einen Radeinschlagwinkel 10 der Vorderräder 5 in Abhängigkeit vom Lenkwinkel 8 einstellt. Basierend auf der zeitlichen Veränderung des Lenkwinkels 8 folgt das Fahrzeug 2 einer vom Fahrer definierten Trajektorie auf der Straße.

Während der Bewegung des Fahrzeugs 2 kann es auf dem Fachmann bekannte Weise dazu kommen, dass die Räder 5, 6 den Kontakt zur Straße verlieren und von der durch den Fahrer vorgegebenen Trajektorie abweichen. Um ein solches Verhalten zu vermeiden, ist das Fahrzeug 2 mit der eingangs erwähnten Fahrdynamikregelung ausgestattet.

Die Fahrdynamikregelung umfasst an jedem Rad 5, 6 die bereits genannte Bremse, die in Fig. 1 mit dem Bezugszeichen 11 versehen ist sowie einen Raddrehzahlsensor 12. Der Raddrehzahlsensor 12 misst die Raddrehzahl 13 jedes Rades und übermittelt sie an eine Steuereinheit 14. Die Steuereinheit 14 empfängt zusätzlich Inertialdaten 16, wie z. B. eine Gierrate des Fahrzeugs 2, von einem Inertialsensor 18 und berechnet daraus die tatsächlich gefahrene Fahrtrichtung. Anschließend überprüft die Steuereinheit 14, ob die ermittelte Fahrtrichtung dem vom Fahrer vorgegebenen Lenkwinkel 8 oder dem Radeinschlagwinkel 10 entspricht. Im Falle einer Abweichung gibt die Steuereinheit 14 ein Steuersignal 20 an einen Aktuator 22 aus, der die Bremsen 11 mit geeigneten Aktuatorsignalen 24 einzeln ansteuert, um die Fahrtrichtung 3 des Fahrzeugs zu korrigieren.

Üblicherweise wird in solchen Regelungen der Lenkwinkel 8 als Maß für die vom Fahrer vorgegebene Fahrtrichtung 3 herangezogen. In modernen Fahrzeugsystemen mit aktiven Lenkungen, veränderlicher Lenkübersetzung oder mechanischer Nachgiebigkeit im Lenksystem kann jedoch eine erhebliche Abweichung zwischen dem Lenkwinkel 8 und dem tatsächlich an den Rädern 5 eingestellten Radeinschlagwinkel 10 auftreten. Daher ist es bei sicherheitskritischen oder hochautomatisierten Anwendungen erforderlich, den Radeinschlagwinkel 10 unmittelbar zu erfassen und als maßgebliche Führungsgröße in die Fahrdynamikregelung einzubeziehen. Nur so kann sichergestellt werden, dass die tatsächliche Reaktion des Fahrzeugs 2 mit der Fahrerabsicht oder dem Systembefehl übereinstimmt und im Falle von Abweichungen gezielte Korrekturen erfolgen können.

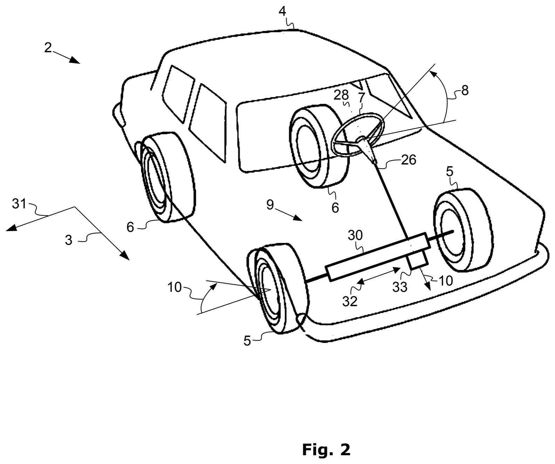

Bezugnehmend auf Fig. 2 wird schematisch der Lenkmechanismus im Fahrzeug 2 erläutert. Um die folgenden Erläuterungen nicht unnötig zu verkomplizieren, wurden viele technische Elemente, wie z. B. aktive Lenkelemente o. ä., weggelassen. Einzelheiten zum Verständnis eines Lenkmechanismus können z. B. der DE 10 2005 007 307 A1 entnommen werden.

Wenn der Fahrer das Lenkrad 7 in den Lenkwinkel 8 verdreht, dreht das Lenkrad 7 eine Lenksäule 26 um eine Rotationsachse 28, welche ihrerseits eine Spurstange 30 zum Einschlagen der Vorderräder bewegt. Der Drehwinkel der Lenksäule 26 um die Rotationsachse 28 entspricht dem Lenkwinkel 8, sodass bei Messung des Drehwinkels der Lenksäule 26 der Lenkwinkel 8 des Lenkrads 7 bekannt ist.

Die Spurstange 30 ist mechanisch mit den Vorderrädern 5 verbunden und überträgt die Drehbewegung der Lenksäule 26 auf eine translatorische Bewegung, durch die sich die Radeinschlagwinkel 10 der Vorderräder 5 verändern. Der tatsächliche Einschlagwinkel 10 eines Vorderrads 5 ergibt sich somit unmittelbar aus der momentanen Position der Spurstange 30 relativ zum Fahrgestell 4 des Fahrzeugs 2. Diese Position beschreibt die laterale Verschiebung der Spurstange 30 in einer Querrichtung 31 quer zur Fahrtrichtung 3 und steht in festem geometrischem Zusammenhang mit dem Radeinschlag 10.

Gestützt auf diesen Zusammenhang kann der Radeinschlagwinkel 10 ermittelt werden, indem die Relativposition 32 der Spurstange 30 zum Fahrstell 4 erfasst wird. Hierzu wird ein Positionssensor 33 verwendet werden, auf den an späterer Stelle näher eingegangen wird. Bei bekannter Kinematik der Komponenten der Lenkung des Fahrzeuges 2 kann aus der Relativposition 32 der aktuell anliegende Radeinschlagwinkel 10 präzise berechnet oder direkt abgeleitet werden. Ein solches Verfahren ermöglicht eine hochgenaue, direkte Erfassung des Radeinschlags 10 unabhängig von mechanischen Toleranzen, Spiel oder variabler Lenkübersetzung. Voraussetzung hierfür ist allerdings, dass der Radeinschlag 10 präzise erfasst wird.

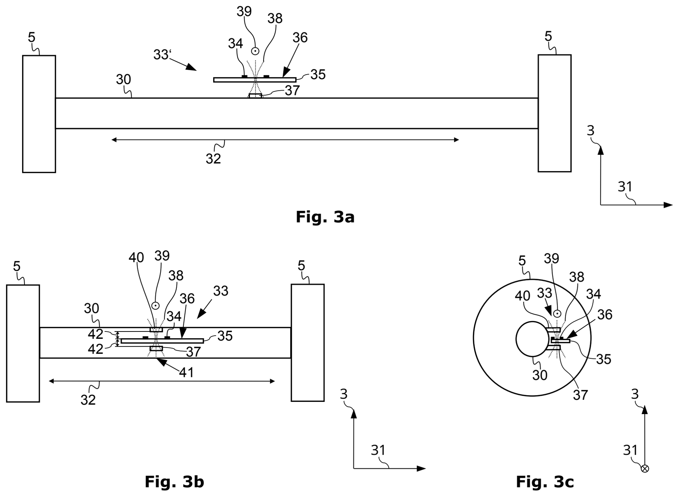

Zur Erfassung der zuvor beschriebenen Relativposition 32 werden herkömlich Positionsensoren 33 in Form von Wirbelstromsensoren eingesetzt. Diese herkömmlichen Wirbelstromsensoren sind in Fig. 3a skizziert und zur Abgrenzung des Beispiels eines erfindungsgemäßen Wirbelstromsensors mit dem Bezugszeichen 33' versehen.

Herkömmliche Wirbelstromsensoren umfassend einen ersten Wirbelstromsensorpartner in Form einer Erregerspule 34, auf die an späterer Stelle in Fig. 4 näher eingegangen werden soll, die auf einer Leiterplatte 35 angeordnet ist. Die Leiterplatte 35 ist normalerweise ortsfest zum Fahrgestell 4 am Fahrzeug gehalten und besitzt neben der Erregerspule 34 auch die notwendige Auswerteschaltung 36, um das noch zu beschreibende Sensorsignal in die zu bestimmende Relativposition 32 umzuwandeln. Daneben umfasst der herkömmliche Wirbelstromsensor 33' einen zur Erregerspule 34 und damit zur Auswerteschaltung 36 an der Spurstange 30 beweglich angeordneten zweiten Wirbelstromsensorpartner in Form eines elektrisch leitfähigen Messreflektors 37, der in der Fachsprache auch Target genannt wird, so dass der Messreflektor 37 in Bezug auf die Erregerspule auf der Leiterplatte 35 in der zu erfassenden Relativposition 32 positionierbar ist.

Im Betrieb wird die Erregerspule 34 auf der Leiterplatte 35 mit einem hochfrequenten Wechselstrom aus der Auswerteschaltung 36 beaufschlagt, wodurch ein elektromagnetisches Quellfeld 38 erzeugt wird. Dieses elektromagnetische Quellfeld 38 erstreckt sich über einen Raum, in den der Messreflektor 37 eintaucht. Befindet sich der Messreflektor 37 in Reichweite dieses elektromagnetischen Quellfeldes 38, so werden aufgrund seiner elektrischen Leitfähigkeit Wirbelströme in ihm induziert. Diese Wirbelströme erzeugen ihrerseits ein, in Fig. 3a nicht weiter referenziertes, elektromagnetisches Induktionsfeld, das dem elektromagnetischen Quellfeld 38 entgegenwirkt. Dieses elektromagnetische Induktionsfeld trägt die Information über die bestimmende Relativposition 32, die auf verschiedene Weise aus dem elektromagnetischen Induktionsfeld extrahiert werden kann.

Eine Möglichkeit der Extraktion besteht darin, die Rückwirkung des Messreflektors 37 auf die Erregerspule 34 direkt zu erfassen. Dieses Messprinzip wird als Dämpfungsprinzip bezeichnet. Dabei führt die von der Relativposition abhängige Rückwirkung zu einer Schwächung des elektromagnetischen Quellfeldes 38 durch das elektromagnetische Induktionsfeld im Bereich der Erregerspule 34, wodurch sich die Relativposition 32 in Form von Änderungen der elektrischen Eigenschaften der Erregerspule manifestiert. So kann die Relativposition 32 beispielsweise anhand einer Änderung der Impedanz, des Wechselstromwiderstands oder der Phasenlage der Erregerspule 34 erfasst werden. Beim Dämpfungsprinzip lassen sich das elektromagnetische Quellfelde 38 und das elektromagnetische Messfeld, das basierend auf dem elektromagnetischen Induktionsfeld die Information über die bestimmende Relativposition 32 trägt, nicht getrennt voneiander beobachten.

Eine alternative Möglichkeit der Extraktion der zu bestimmenden Relativposition 32 besteht darin, die Rückwirkung des Messreflektors 37 mittels wenigstens einer - in den Figuren nicht weiter dargestellten - Empfängerspule zu erfassen. Dieses Messprinzip wird als Transformatorprinzip bezeichnet. Dabei induziert das vom Messreflektor 37 ausgehende, von der Relativposition 32 abhängige elektromagnetisches Induktionsfeld eine Spannung in der wenigstens einen Empfängerspule. Die Relativposition 32 kann in diesem Fall aus charakteristischen Eigenschaften der induzierten Spannung bestimmt werden, beispielsweise aus deren Amplitude, Phasenlage oder Frequenzverhalten. Bei der Verwendung mehrerer Empfängerspulen sollten diese zweckmäßigerweise in einer definierten phasenversetzten Geometrie, etwa sinus- und kosinusförmig, zueinander angeordnet sein. Durch eine phasenbasierte Interpolation der aus diesen phasenversetzt zueinander angeordneten Empfängerspulen gewonnenen Signale lässt sich die Relativposition 32 hochauflösend innerhalb eines geometrischen Rasters nach dem Noniusprinzip beispielsweise mit dem Vernier-Algorithmus bestimmen, was eine besonders präzise und feingliedrige Erfassung der Relativposition 32 ermöglicht. Da beim Transformatorprinzip das elektromagnetische Quellfeld 38 und das elektromagnetische Messfeld, das basierend auf dem elektromagnetischen Induktionsfeld die Information über die bestimmende Relativposition 32 trägt, an verschiedenen Stellen im Sensor wirken, können diese beiden Felder hier getrennt voneiander beobachtet werden.

In an sich bekannter Weise kann das elektromagnetische Quellfeld 38 durch seine in Fig. 3a nicht weiter referenzierten magnetischen Feldlinien B beschrieben werden oder alternativ über die Rotation ∇×B, welche die lokale Wirbelstruktur und damit die Verteilung des Feldes im Raum charakterisiert. Zur Beschreibung der Orientierung und Lage der Erregerspule 34 unabhängig von ihrer konkreten geometrischen Ausgestaltung (z. B. Flachspule, Stabspule oder sonstige Wicklungsform) wird ein sogenannter äquivalenter Stromrichtungsvektor eingeführt, der in Fig. 3a mit dem Bezugszeichen 39 versehen ist. Dieser äquivalente Stromrichtungsvektor 39 bezeichnet diejenige Richtung, entlang der ein elektrischer Strom verlaufen müsste, um das lokal vorhandene elektromagnetische Quellfeld 38 durch eine ideale stromdurchflossene Wicklung zu erzeugen. Er ergibt sich formal aus der Rotation des elektromagnetische Quellfeld 38 gemäß dem Ampèreschen Gesetz, das besagt, dass ∇×B ein Maß für die lokale Stromdichte J ist, die das elektromagnetische Quellfeld 38 erzeugt. Im dargestellten Fall entspricht der äquivalente Stromrichtungsvektor 39 der Richtung des nicht weiter referenzierten Erregerstroms, der durch die Erregerspule 34 fließt. Während das elektromagnetische Quellfeld 38 selbst konzentrisch um diesen Stromfluss verläuft, gibt der äquivalente Stromrichtungsvektor 39 die zugrunde liegende Stromflussrichtung an und erlaubt so eine systematische Beschreibung der Lage und Orientierung der Erregerspule 34 im Raum.

Im elektromagnetischen Quellfeld 38 gemäß Fig. 3a ist die Leiterplatte 35 derart angeordnet, dass der äquivalente Stromrichtungsvektor 39 der Erregerspule 34 in einer lokalen Tangentialebene zur Bewegungsbahn der Spurstange 30 verläuft. Die Tangentialebene ist dabei eine Ebene, die im Einbauzustand des Fahrzeugs 2 durch die Verbindungslinie der Drehpunkte der Vorderräder 5, oder anders ausgedrückt der Längsrichtung der Spurstange 30, also hier der Querrichtung 31 und einer Umfangsrichtung um die Verbindungslinie der Drehpunkte der Vorderräder 5 aufgespannt wird. Durch diese Ausrichtung des äquivalenten Stromrichtungsvektors 39 wird die Erregerspule 34 in Fig. 3a so positioniert, dass das elektromagnetische Quellfeld 38 im Zentrum der Erregerspule 34 senkrecht zur Spurstange 30 ausgerichtet ist.

Die Auswerteschaltung auf der Leiterplatte 35 detektiert diese Impedanzänderung gemäß dem oben erläuterten Dämpfungsprinzip oder Transformatorprinzip und leitet daraus die Relativposition 32 des Messreflektors 37 relativ zur Erregerspule 34 ab. Eine Auswerteschaltung, die das Transformatorprinzip unter Verwendung des Noniusprinzips verwirklicht, kann der DE 10 2022 117 762 A1 entnommen werden. Aufgrund dieser physikalischen Kopplung ist die Relativbewegung der Spurstange 30 gegenüber dem Fahrgestell 4 und damit auch der Radeinschlagswinkel 10 durch den herkömmlichen Wirbelstromsensor 33' erfassbar.

In der Praxis ergibt sich jedoch ein Problem bei der Anwendung des herkömmlichen Wirbelstromsensors 33' an der Spurstange 30. Da die Spurstange 30 während des Betriebs mechanischen Belastungen unterliegt - vor allem durch die Last des Fahrgestells 4 -, kann sie sich elastisch verformen. Diese Verformung führt insbesondere im Bereich zwischen den Lagerpunkten der Spurstange 30 zu einer Verbiegung, wodurch sich die Position des Messreflektors 37 vor allem quer zur Querrichtung 31 und quer zur Fahrtrichtung 3 in einer nicht weiter referenzierten Höhenrichtung des Fahrzeuges 2 geringfügig, aber messrelevant verschiebt.

Solche Querverschiebungen des Messreflektors 37 verursachen Abstandsänderungen zwischen Messreflektor 37 und Erregerspule 34, die nicht auf eine tatsächliche Relativbewegung der Spurstange 30 in der Querrichtung 31 zurückzuführen sind, sondern aus lateralen Verlagerungen quer dazu infolge der zuvor erläuterten Verbiegung resultieren. Das die zu erfassende Relativposition 32 tragende elektromagnetische Messfeld wird dadurch asymmetrisch beeinflusst, was zu einer verfälschten Impedanzmessung und somit zu einem Messfehler in der ermittelten Relativposition 32 führen kann. In der Folge wird ein falscher Radeinschlagswinkel 10 detektiert, obwohl sich die Spurstange 30 in der Bewegungsrichtung gar nicht verändert hat.

Besonders kritisch ist dieser Effekt in der im Rahmen von Fig. 1 erläuterten sicherheitsrelevanten Fahrdynamikregelung, bei der bereits kleine Messfehler zu Fehleingriffen oder ungenauer Fahrzeugführung führen können. Daher wird mit dem erfindungsgemäßen Positionssensor 33 ein Wirbelstromsensor vorgeschlagen, der diese Querverschiebungen erkennen, korrigieren oder im elekromagnetischen Messfeld erst gar nicht auftreten lassen kann. Dies wird nachstehend anhand der Figuren 3b und 3c erläutert.

Zur Vermeidung der zuvor beschriebenen Querverschiebungsfehler ist in den erfindungsmäßen Positionssensor 33 ein zusätzlicher Korrekturpartner eingesetzt, der in Form eines weiteren Reflektors ausgebildet ist und im Folgenden als Korrekturreflektor 40 bezeichnet wird. Der Korrekturreflektor 40 ist zum Messreflektor 37 ortsfest auf der Spurstange 30 angeordnet, tritt in Bewegungsrichtung 32 wie der Messreflektor 37 in das elektromagnetische Quellfeld 38 ein und wirkt durch ebenfalls induzierte Wirbelströme mit einem analogen elektromagnetischen Induktionsfeld entgegengesetzt zum elektromagnetischen Induktionsfeld des Messreflektors 37.

Durch die ortsfeste Anordnung des Korrekturreflektors 40 relativ zum Messreflektor 37 wird eine strukturelle Beziehung geschaffen, die es ermöglicht, Querbewegungen der Erregerspule 34 in Fahrtrichtung 3 von Relativbewegungen in der Querrichtung 31 zu unterscheiden. Bewegt sich die Erregerspule 34 infolge einer durch Verbiegung verursachten Querverschiebung, so verändert sich ihr Abstand zu beiden Reflektoren 37 und 40 jeweils in charakteristischer Weise. Da die relative Geometrie der Reflektoren zueinander konstant ist, lassen sich aus den unterschiedlichen Wirkungen des elektromagnetischen Quellfeldes 38 auf die beiden Reflektoren Rückschlüsse auf die tatsächliche Ursache der Feldänderung ziehen. Insbesondere kann so erkannt werden, ob die Änderung auf eine gewollte Bewegung in Querrichtung 31 oder auf eine unerwünschte Querbewegung in Fahrtrichtung 3 zurückzuführen ist. Dadurch wird eine Trennung der Messgrößen erreicht, die die Grundlage für eine zuverlässige Kompensation oder Fehlererkennung bildet.

Diese Idee ist dabei nicht dahingehend einschränkend zu verstehen, dass zwingend zwei Reflektoren 37, 40 vorgesehen sein müssen. Wesentlich ist vielmehr, dass ein zusätzlicher Korrekturpartner in das elektromagnetische Quellfeld 38 eingebunden ist, der in einem vorbestimmten Abstand ortsfest zu einem der beiden Wirbelstromsensorpartner 34, 37 - also entweder zur Erregerspule 34 oder zum Messreflektor 37 - angeordnet ist. Durch diese definierte geometrische Kopplung wird sichergestellt, dass eine Querverschiebung des anderen Wirbelstromsensorpartners 37, 34, insbesondere in Fahrtrichtung 3, eine charakteristische Veränderung in der Feldverteilung verursacht, die sich durch geeignete Auswertung erkennen und/oder unterdrücken lässt.

Der Korrekturpartner kann dabei sowohl der Korrekturreflektor 40 als auch eine zusätzliche Erregerspule oder ein beliebiges elektromagnetisch wirksames Element sein. Entscheidend ist lediglich, dass seine feste Beziehung zu einem der Wirbelstromsensorpartner 34, 37 eine strukturelle Referenz bildet, anhand derer sich feldwirksame Änderungen aufgrund von Querbewegungen eindeutig identifizieren oder kompensieren lassen. Damit erlaubt die Erfindung eine generische und flexible Gestaltung des Positionssensors 33 in Form des Wirbelstromsensors, die je nach Anforderungen und Bauraumbedingungen sowohl auf mechanischer als auch auf signaltechnischer Ebene angepasst werden kann.

In der vorliegenden Ausführung sind die beiden Reflektoren 37, 40 auf einer gleichen Position 41 in der Querrichtung 31 auf der Spurstange 30. Im Unterschied herkömmlichen Wirbelstromsensor 33', bei dem die Leiterplatte 35 mit der Erregerspule 34 in einer Tangentialebene zur Spurstange 30 angeordnet ist, ist die Leiterplatte 35 mit der Erregerspule 34 in der Ausführung gemäß Fig. 3b nun in einer Radialebene zur Spurstange 30 positioniert. Die Radialebene ist dabei eine Ebene, die im Einbauzustand des Fahrzeugs 2 durch die Verbindungslinie der Drehpunkte der Vorderräder 5, oder anders ausgedrückt der Längsrichtung der Spurstange 30, also hier der Querrichtung 31 und einer von dieser Verbindungslinie der Drehpunkte der Vorderräder 5 radial weggerichteten Radialrichtung aufgespannt wird. Vereinfacht gesagt steht die Leiterplatte 35 mit der Erregerspule 34 im herkömmlichen Wirbelstromsensor 33' tangential zur Spurstange 30 und im erfindungsgemäßen Positionssensor 33 radial zur Spurstange 30.

Im erfindungsmäßen Positionssensor 33 verläuft der äquivalente Stromrichtungsvektor 39 der Erregerspule 34 damit in der Radialabene, was bedeutet, dass die magnetischen Feldlinien B im Zentrum der Erregerspule 34 nun tangential zur Spurstange 30 ausgerichtet sind. Die beiden Reflektoren 37 und 40 sind in dieser Ausführung mit jeweils gleichem Reflektorabstand 42 auf gegenüberliegenden Seiten der Leiterplatte 35 angeordnet. Sie sind hinsichtlich Material und Geometrie grundsätzlich baugleich und tragen durch ihre symmetrische Anordnung zur Feldsymmetrie und Messstabilität bei.

Bei einer Querverschiebung der Spurstange 30, etwa infolge der obgen genannten elastischen Verbiegung unter Fahrbelastung, verändern sich die Abstände 42 der beiden Reflektoren 37 und 40 zur Erregerspule 34 nicht gleichläufig, sondern gegenseitig entgegengesetzt. Da die Reflektoren 37 und 40 in einer gemeinsamen Position 41 in Querrichtung 31 angeordnet, zueinander baugleich ausgeführt und mit gleichem Reflektorabstand 42 auf gegenüberliegenden Seiten der senkrecht zur Spurstange 30 ausgerichteten Leiterplatte 35 positioniert sind, wirkt sich eine Querbewegung der Spurstange 30 senkrecht zur Querrichtung 31 in entgegengesetzter Weise auf die elektromagnetische Kopplung beider Reflektoren 37 und 40 zur Erregerspule 34 aus.

Bewegt sich der Messreflektor 37 infolge der Spurstangenverformung näher an die Erregerspule 34 heran, entfernt sich der Korrekturreflektor 40 im gleichen Maß - und umgekehrt. Beide Reflektoren 37, 40 erzeugen jeweils ein von ihrer Position abhängiges elektromagnetisches Induktionsfeld im Bereich des Quellfeldes 38, wobei das vom Korrekturreflektor 40 erzeugte Induktionsfeld demjenigen des Messreflektors 37 entgegengerichtet ist.

Durch diese gegenläufige Anordnung ergibt sich die folgende strukturierte Selbstkompensation: Die durch eine Querbewegung verursachten Änderungen der Induktionsfelder wirken sich gegenseitig kompensierend auf das resultierende elektromagnetische Messfeld aus. Das so korrigierte elektromagnetische Messfeld kann anschließend mittels eines der bekannten Wirbelstrom-Messprinzipien - entweder durch Erfassung der Impedanzänderung der Erregerspule (Dämpfungsprinzip) oder über eine durch das elektromagnetische Messfeld induzierte Spannung in einer Empfangsspule (Transformatorprinzip) - zur Bestimmung der um Querverschiebung bereinigten Relativposition in Querrichtung 31 ausgewertet werden.

Eine separate differenzielle Signalverarbeitung oder eine weitergehende Modifikation der Auswerteschaltung 36 des herkömmlichen Wirbelstromsensors 33' ist hierzu nicht erforderlich.

### Bezugszeichenliste

- 2: Fahrzeug
- 3: Fahrtrichtung
- 4: Fahrgestell (Chassis)
- 5: Vorderräder
- 6: Hinterräder
- 7: Lenkrad
- 8: Lenkwinkel
- 9: Lenkgetriebe
- 10: Radeinschlagwinkel
- 11: Bremse
- 12: Raddrehzahlsensor
- 13: Raddrehzahl
- 14: Steuereinheit
- 16: Inertialdaten
- 18: Inertialsensor
- 20: Steuersignal
- 22: Aktuator
- 24: Aktuatorsignal
- 26: Lenksäule
- 28: Rotationsachse der Lenksäule
- 30: Spurstange (Lenkstange)
- 31: Querrichtung (quer zur Fahrtrichtung)
- 32: Relativposition
- 33: Positionssensor (erfindungsgemäßer Wirbelstromsensor)
- 33': herkömmlicher Wirbelstromsensor
- 34: Erregerspule
- 35: Leiterplatte
- 36: Auswerteschaltung
- 37: Messreflektor
- 38: elektromagnetisches Quellfeld
- 39: äquivalenter Stromrichtungsvektor (∇×B)
- 40: Korrekturreflektor
- 41: Position der Reflektoren in Querrichtung
- 42: Reflektorabstand zur Erregerspule

## Patentansprüche

1. Wirbelstromsensor (33) zur Erfassung einer Relativposition (32) in einer Bewegungsrichtung, umfassend
- einen ersten Wirbelstromsensorpartner (34, 37) und einen zum ersten Wirbelstromsensorpartner in der zu erfassenden Relativposition (32) dazu positionierbaren zweiten Wirbelstromsensorpartner (37, 34), wobei die Wirbelstromsensorpartner eingerichtet sind, ein von der Relativposition abhängiges elektromagnetisches Messfeld zu erregen, und
- eine Auswerteschaltung (36), die eingerichtet ist, die Relativposition (32) basierend auf dem elektromagnetischen Messfeld zu bestimmen,
- wobei einer der Wirbelstrompartner (34, 37) eingerichtet ist, das elektromagnetische Messfeld zu erregen und der andere Wirbelstrompartner (37, 34) eingerichtet ist, das basierend auf dem elekromagnetischen Messfeld ein elektromagnetisches Induktionsfeld zu erregen, und
- wobei der das elektromagnetische Induktionsfeld erregende Wirbelstrompartner in einer Querrichtung quer zur Bewegungsrichtung und quer zum Abstand der Wirbelstrompartner eine kleinere Ausdehnung besitzt, als der das elektromagnetische Messfeld erregende Wirbelstrompartner,
**gekennzeichnet durch**
- einen zum ersten Wirbelstromsensorpartner in einem vorbestimmten Abstand ortsfest angeordneten Korrekturpartner (40) zum Erregen eines elektromagnetischen Korrekturfeldes zur Korrektur einer Querverschiebung zwischen den Wirbelstromsensorpartnern quer zur Bewegungsrichtung (31).

2. Wirbelstromsensor nach Anspruch 1, wobei der erste Wirbelstromsensorpartner einen Reflektor (37) und der zweite Wirbelstromsensorpartner eine Erregerspule (34) zur Erregung eines elektromagnetischen Quellfeldes (38) umfasst, wobei der Reflektor (37) eingerichtet ist, basierend auf dem elektromagnetischen Quellfeld (38) ein im elektromagnetischen Messfeld enthaltenes elektromagnetisches Induktionsfeld zu erregen.

3. Wirbelstromsensor nach Anspruch 2, wobei der Korrekturpartner ein Reflektor (40) ist und eingerichtet ist, ein dem elektromagnetischen Induktionsfeld des ersten Wirbelstrompartners (37) entgegengesetztes elektromagnetisches Induktionsfeld zu erregen.

4. Wirbelstromsensor nach Anspruch 2 oder 3, wobei die Erregerspule (34) als sich in einer durch die Bewegungsrichtung aufgespannten Spulenebene erstreckende Flachspule ausgebildet ist, wobei die Spulenebene vorzugsweise senkrecht zu einer gedachten Verbindungslinie zwischen dem ersten Wirbelstromsensorpartner (37) und dem Korrekturpartner (40) steht.

5. Wirbelstromsensor nach einem der vorstehenden Ansprüche, wobei der zweite Wirbelstromsensorpartner einen Raum in einen ersten Halbraum und einen dem ersten Halbraum gegenüberliegenden zweiten Halbraum trennt, und wobei der erste Wirbelstromsensorpartner (37) im ersten Halbraum und der Korrekturpartner (40) im zweiten Halbraum in der Bewegungsrichtung und/oder quer zur Bewegungsrichtung (31) gesehen vorzugsweise auf einer gleichen Position (41) angeordnet sind.

6. Wirbelstromsensor nach Anspruch 5, wobei der erste Wirbelstromsensorpartner (37) im ersten Halbraum und der Korrekturpartner (40) baugleich sind.

7. Spurstangensensor zur Erfassung einer Position einer Spurstange (30) eines Fahrzeuges (2) in einer Querrichtung (31) quer zur Fahrtrichtung (3), umfassend einen Wirbelstromsensor (33) nach einem der vorstehenden Ansprüche, wobei ein Wirbelstromsensorpartner ortsfest zu einem Chassis (4) des Fahrzeuges (2) und der andere Wirbelstromsensorpartner ortsfest zur Spurstange (30) des Fahrzeuges verbindbar ist.

8. Spurstangensensor nach Anspruch 7, wobei das elektromagnetische Quellfeld (38) eine magnetische Flussdichte aufweist, deren äquivalenter Stromrichtungsvektor (39) in einer radial zur Bewegungsrichtung (31) ausgerichteten Ebene angeordnet ist.

9. Verfahren zum Erfassen einer Relativposition (32) in einer Bewegungsrichtung mit einem Wirbelstromsensor (33) nach einem der vorstehenden Ansprüche, umfassend:
- Erregen eines elektromagnetischen Quellfeldes (38) mit einem der Wirbelstromsensorpartner (34, 37); und
- Erzeugen eines elektromagnetischen Messfeldes enthaltend ein basierend auf dem elektromagnetischen Quellfeldes (38) erregten elektromagnetischen Induktionsfeld mit dem anderen der Wirbelstromsensorpartner (37, 34);
**gekennzeichnet durch**
- Erregen eines elektromagnetischen Korrekturfeldes mit dem Korrekturpartner (40) zur Korrektur einer Querverschiebung in Fahrtrichtung (3) zwischen den Wirbelstromsensorpartnern quer zur Bewegungsrichtung (31); und
- Bestimmen der Relativposition (32) basierend auf dem elektromagnetischen Messfeld und dem elektromagnetischen Korrekturfeld.

10. Steuervorrichtung zur Durchführung des Verfahrens nach Anspruch 9.
